# EUROPEAN PATENT APPLICATION

(11) **EP 4 681 551 A1**
(43) Date of publication of application: **21.01.2026**
(21) Application number: 24774857.7
(22) Date of filing: 15.03.2024
(51) Int. Cl.: A23L 27/12, A23L 2/00, A23L 2/56, A23L 2/60, A23L 27/00, A23L 27/20, A23L 5/00

(54) **FLAVOURING COMPONENT-CONTAINING COMPOSITION, FLAVOUR-IMPARTING AGENT, FOOD, CONFECTIONERY, AND METHOD FOR PRODUCING BEVERAGE**

(30) Priority: 17.03.2023 JP 2023043492
(71) Applicant: Suntory Holdings Limited, Osaka-shi, Osaka 530-8203 (JP)
(72) Inventor: IBUSUKI, Daigo, Soraku-gun, Kyoto 619-0284 (JP); NOMACHI, Makoto, Soraku-gun, Kyoto 619-0284 (JP); FUJII, Keizo, Soraku-gun, Kyoto 619-0284 (JP); MURAI, Keiichi, Soraku-gun, Kyoto 619-0284 (JP)
(74) Representative: Vossius & Partner Patentanwälte Rechtsanwälte mbB
(86) International application number: PCT/JP2024/010239
(87) International publication number: WO 2024/195721

(57) **Abstract**

Provided is an aroma component-containing composition containing an edible and water-soluble carrier; and limonene carried on the carrier, the aroma component-containing composition having a limonene content of 1.0 mg/g or more per 1 g of the aroma component-containing composition.

## Description

### TECHNICAL FIELD

The present invention relates to aroma component-containing compositions, aroma-imparting agents, foods, confectionery products, and methods for producing beverages.

### BACKGROUND ART

Beverages with citrus aromas, such as lemon tea with a lemon aroma, are widely enjoyed. At teahouses, for example, lemon tea is often served as black tea with a slice of lemon, which can impart a lemon aroma to the black tea when added to the black tea.

In the case of canned beverages, plastic bottle beverages, and the like, citrus flavorings are pre-added to beverages so that the aromas are imparted to the beverages. Still, this method involves degradation of the flavoring components and has difficulty in imparting a fresh aroma similar to that of beverages with a slice of citrus.

When black tea, for example, is served in a cup, adding a slice of citrus can impart a fresh aroma, but preparing a slice of citrus for every serving consumes a lot of time and effort. Further, canned beverages and plastic bottle beverages are often consumed outdoors and therefore adding a slice of citrus when the beverages are consumed is not a practical measure.

From these points of view, aroma-imparting agents are awaited that can easily impart an aroma instead of adding a slice of citrus.

Patent Literature 1 discloses a method for giving a flavor, aroma, color, energy, vitamins, and mineral salts to beverages as a result of their being mixed with a sweetener at the moment of consumption. In a specific example, saccharose is impregnated with cognac as an additive and is packed with a sheet material, which is to be added to coffee. According to the literature, this technique can sweeten the coffee and allows a consumer to enjoy the aroma of cognac.

### CITATION LIST

### - Patent Literature

Patent Literature 1: WO 99/25879

### SUMMARY OF INVENTION

### - Technical Problem

A known citrus aroma component is limonene. Adding limonene can impart a citrus aroma, but limonene is prone to degradation and thus needs to be prevented from degradation in any way before use as an aroma-imparting agent.

The technique disclosed in Patent Literature 1 includes adding a sweetener to a beverage at the time of consumption to impart an aroma thereto, but is not a technique that aims to prevent degradation of an aroma component that is prone to degradation.

In response to this situation, the present invention aims to provide an aroma component-containing composition that contains limonene and is less prone to degradation, and an aroma-imparting agent containing the aroma component-containing composition, for example.

### - Solution to Problem

In other words, the present invention relates to an aroma component-containing composition and an aroma-imparting agent containing the aroma component-containing composition, for example.
(1) An aroma component-containing composition containing:
   an edible and water-soluble carrier; and
   limonene carried on the carrier,
   the aroma component-containing composition having a limonene content of 1.0 mg/g or more per 1 g of the aroma component-containing composition.
(2) The aroma component-containing composition according to the clause (1), wherein the carrier contains sugar as one of raw materials or as a single raw material.
(3) The aroma component-containing composition according to the clause (1) or (2), wherein the carrier is a sugar cube.
(4) The aroma component-containing composition according to any one of the clauses (1) to (3), wherein the carrier further carries an oil and the limonene is contained in the oil.
(5) The aroma component-containing composition according to the clause (4), wherein the oil is an oil of a citrus.
(6) The aroma component-containing composition according to the clause (5), wherein the citrus is lemon.
(7) The aroma component-containing composition according to any one of the clauses (1) to (6), wherein the carrier further carries at least one selected from the group consisting of citral, linalool, and β-caryophyllene.
(8) The aroma component-containing composition according to any one of the clauses (1) to (7), wherein the carrier contains at least one selected from the group consisting of sodium citrate and sodium ascorbate.
(9) The aroma component-containing composition according to any one of the clauses (1) to (8), wherein an aqueous solution of the aroma component-containing composition dissolved in water is basic.
(10) The aroma component-containing composition according to any one of the clauses (1) to (9), wherein the aroma component-containing composition is free of an emulsifier.
(11) The aroma component-containing composition according to any one of the clauses (1) to (10), which is used for imparting an aroma to a beverage.
(12) An aroma-imparting agent containing the aroma component-containing composition according to any one of the clauses (1) to (11).
(13) A food containing the aroma component-containing composition according to any one of the clauses (1) to (11).
(14) A confectionery product containing the aroma component-containing composition according to any one of the clauses (1) to (11).
(15) A method for producing a beverage, the method including mixing the aroma component-containing composition according to any one of the clauses (1) to (11) with a liquid to provide a beverage in which the aroma component-containing composition is dissolved in the liquid.

### - Advantageous Effects of Invention

The present invention can provide an aroma component-containing composition that contains limonene and is less prone to degradation, and an aroma-imparting agent containing the aroma component-containing composition, for example.

### DESCRIPTION OF EMBODIMENTS

The aroma component-containing composition of the present invention contains an edible and water-soluble carrier; and limonene carried on the carrier, the aroma component-containing composition having a limonene content of 1.0 mg/g or more per 1 g of the aroma component-containing composition.

The aroma component-containing composition of the present invention has a citrus aroma derived from limonene. Expected uses of the aroma component-containing composition include aroma-imparting agents, foods, confectionery products, bath additives, and the like.

The aroma component-containing composition of the present invention contains an edible and water-soluble carrier.

The carrier is a solid that can retain limonene on its surface. In order to reduce exposure of limonene to the air or moisture, the carrier is preferably a porous article that allows limonene to be present inside the carrier.

The edible substance herein encompasses foods and food additives prescribed in Article 4(2) of the Food Sanitation Act.

The water-soluble substance herein refers to any substance having solubility (any substance that is not insoluble) in water. For example, the water-soluble substance may be a substance that requires less than 1000 mL of a solvent (water) to dissolve 1 g of the substance at room temperature.

The carrier is preferably one prepared by shaping an edible and water-soluble raw material. Examples of raw materials of the carrier include saccharides, dietary fiber, carbohydrates, salts, proteins, amino acids, starch, and vitamins. One of these may be used alone as a raw material, or a plurality of these may be combined to serve as raw materials.

The carrier preferably has a volume of 0.3 cm³ or greater, 0.5 cm³ or greater, or 1.0 cm³ or greater, for example. The volume of the carrier is also preferably 15 cm³ or smaller, 8.0 cm³ or smaller, or 3.5 cm³ or smaller, for example.

The carrier may have any shape, and may be one having a shape such as a cube, a cuboid, a sphere, a plate, or a rod, or may be one having a decorative shape such as a star shape, a flower shape, or a heart shape.

Preferred among these is a carrier containing sugar as one of raw materials or as a single raw material, with a sugar cube being more preferred as a carrier.

Examples of the sugar before shaping include white soft sugar, granulated sugar, powdered sugar, san-on-to (Japanese brown sugar), cane sugar, and beet sugar. These may be mixed for use.

In the case of using sugar as one of the raw materials, the proportion of the sugar in the carrier is preferably 0.01 to 99.99 wt%.

Using a carrier that contains sugar, such as a sugar cube, as one of the raw materials or as a single raw material allows the sugar to incorporate water in the form of crystal water, reducing the water activity. This reduction in water activity can increase the preservability of the aroma component-containing composition as a food.

Further, water causes degradation of limonene. Thus, providing an environment free of water (poor in water) around limonene is effective in preventing degradation of limonene.

In the case where limonene is contained in an oil, sugar can incorporate water present in the oil and is thus effective in preventing degradation of limonene.

The carrier may also contain dietary fiber as a raw material. The dietary fiber is preferably a water-soluble dietary fiber such as indigestible dextrin or polydextrose. Any of these may also preferably be combined with other raw materials such as sugar to serve as raw materials of the carrier.

In the case of using dietary fiber as a raw material of the carrier, the proportion of the dietary fiber in the carrier is preferably 0.01 to 90 wt%.

The carrier may also contain a different saccharide.

Examples of the saccharide include ribulose, xylulose, ribose, arabinose, xylose, lyxose, deoxyribose, psicose, fructose, sorbose, tagatose, allose, altrose, glucose, mannose, gulose, idose, galactose, talose, fucose, fuculose, rhamnose, sedoheptulose, sucrose, lactose, maltose, trehalose, turanose, cellobiose, raffinose, melezitose, maltotriose, acarbose, stachyose, maltotetraose, maltopentaose, maltohexaose, maltoheptaose, maltooctaose, maltononaose, maltodecaose, and oligosaccharides (fructooligosaccharides, galactooligosaccharides, mannan oligosaccharides, lactosucrose oligosaccharides).

The carrier may also contain any of starch-class compounds (amylose, amylopectin), pectin, glucomannan, alginic acid, sodium alginate, guar gum, chondroitin sulfate, dextrin, polydextrose, inulin, cellulose, hemicellulose, lignin, agarose, and agaropectin.

Any of these substances may be used as some of the components of the carrier.

Limonene carried on the carrier may be a purified product of limonene carried on the carrier or may be a limonene-containing composition carried on the carrier.

Examples of the limonene-containing composition include a limonene-containing oil and a limonene-containing aroma component.

In particular, preferably, the carrier carries an oil and the oil contains limonene. The limonene-containing oil is preferably essential oil.

Limonene contained in the carrier may be one contained in a plant-derived component such as essential oil, or may be a synthesized product. In the case of a plant-derived component, the source plant is preferably a citrus. Examples of the citrus include oranges, mandarins, grapefruits, pomelos, kumquat, lemon, lime, bergamot orange, sudachi, and yuzu.

Examples of the limonene-containing oil include oils of these citruses. The citrus is preferably lemon.

In the aroma component-containing composition of the present invention, preferably, the carrier further carries at least one selected from the group consisting of citral, linalool, and β-caryophyllene.

These components are used as components for imparting aromas together with limonene.

In the aroma component-containing composition of the present invention, limonene is carried on the carrier.

Carrying limonene on the carrier can reduce direct contact of limonene with water and air, which cause degradation of limonene, resulting in an aroma component-containing composition that is less prone to degradation.

The aroma component-containing composition of the present invention has a limonene content of 1.0 mg/g or more per 1 g of the aroma component-containing composition. A limonene content of 1.0 mg/g or more means that limonene is present in a large proportion. Thus, the aroma component-containing composition can have a sufficient aroma even when the aroma component-containing composition is used in a smaller amount. The aroma component-containing composition, when used as an aroma-imparting agent, can exert a sufficient aroma-imparting effect.

Further, limonene is less prone to degradation even though limonene is contained in a large proportion. This can prevent a degradation-derived odor involved in degradation of limonene.

The limonene content per 1 g of the aroma component-containing composition is more preferably 5.0 mg/g or more, still more preferably 10 mg/g or more.

The limonene content per 1 g of the aroma component-containing composition may be 100 mg/g or less. This amount may be 50 mg/g or less or may be 40 mg/g or less.

The amount of limonene contained per 1 g of the aroma component-containing composition can be determined by gas chromatography.

Preferably, an aqueous solution of the aroma component-containing composition dissolved in water is basic.

Limonene is known to decompose more easily under strong acidic conditions (e.g., at a pH of 4 or lower) than under weak acidic conditions. Thus, keeping the surroundings of limonene from becoming acidic conditions is preferred to prevent degradation of limonene.

The fact that an aqueous solution of the aroma component-containing composition dissolved in water is basic means that a basic substance is present around limonene in the aroma component-containing composition, which keeps the surroundings of limonene from becoming acidic conditions. Thus, adjusting the composition such that an aqueous solution of the aroma component-containing composition dissolved in water is basic can prevent decomposition of limonene during storage.

Preferably, an aqueous solution of the aroma component-containing composition dissolved in water has a pH of 4.5 to 9.0.

This pH range corresponds to a range from weak acidity to basicity, which is less likely to cause decomposition of limonene.

In the case where the pH of an aqueous solution of the aroma component-containing composition dissolved in water is controlled to fall within a basic range, the pH of the aqueous solution is preferably 7.1 to 9.0.

This pH refers to the pH of a solution of 1 g of the aroma component-containing composition dissolved in 100 mL of water. The pH can be measured using a pH meter.

The aroma component-containing composition of the present invention preferably contains at least one selected from the group consisting of sodium citrate and sodium ascorbate.

These substances may be contained in the carrier, or may be contained in a component (e.g., an oil) other than the carrier.

The presence of these substances can prevent the environment around limonene from being acidic and can reduce the water activity, further preventing decomposition of limonene during storage.

Sodium citrate may be any of a monosodium salt, a disodium salt, and a trisodium salt, with trisodium citrate being preferred.

The aroma component-containing composition of the present invention may also contain a citrate salt other than sodium citrate and an ascorbate salt other than sodium ascorbate.

In the case where the aroma component-containing composition of the present invention contains at least one selected from the group consisting of sodium citrate and sodium ascorbate, the total proportion of sodium citrate and sodium ascorbate is preferably 0.05 to 5 wt% in the aroma component-containing composition.

The carrier preferably contains at least one selected from the group consisting of sodium citrate and sodium ascorbate.

The presence of these substances can prevent the environment around limonene from being acidic and can reduce the water activity, further preventing decomposition of limonene during storage.

Sodium citrate may be any of a monosodium salt, a disodium salt, and a trisodium salt, with trisodium citrate being preferred.

The carrier may also contain a citrate salt other than sodium citrate and an ascorbate salt other than sodium ascorbate.

In the case where the carrier contains at least one selected from the group consisting of sodium citrate and sodium ascorbate, the total proportion of sodium citrate and sodium ascorbate is preferably 0.05 to 5 wt% in the carrier.

In the present invention, the sugar cube encompasses sugar cubes partially containing other components such as sodium citrate and sodium ascorbate. A preferred carrier can be obtained by preparing a powder mixture of sugar with sodium citrate and/or sodium ascorbate and shaping the mixture into a sugar cube.

In this case, the proportion of sugar in the resulting sugar cube is preferably 95 to 99.95 wt% and the total proportion of sodium citrate and sodium ascorbate is preferably 0.05 to 5 wt%.

Preferably, the aroma component-containing composition of the present invention contains no emulsifier or merely a small amount thereof. The emulsifier is a component necessary for obtaining powdery aroma components. Still, the aroma component-containing composition of the present invention is not in the form of powder and contains a solid carrier, and is therefore distinguished from powdery aroma components containing an emulsifier.

Also, preferably, the carrier that makes the aroma component-containing composition of the present invention contains no emulsifier or merely a small amount thereof.

In the case where the carrier is a sugar cube, it can be shaped without an emulsifier.

Examples of the emulsifier herein include a glycerol fatty acid ester, saponin, a sucrose fatty acid ester, and lecithin.

In the case of using an emulsifier, the proportion of the emulsifier in the aroma component-containing composition or the carrier is preferably 0.5 wt% or lower, and may be 0.3 wt% or lower, 0.1 wt% or lower, or 0.05 wt% or lower.

The aroma component-containing composition of the present invention can be used for imparting an aroma to a beverage.

Non-limiting examples of the beverage include water, tea beverages (e.g., green tea, black tea, pu'er tea, oolong tea), coffee, coffee-based beverages, carbonated beverages (e.g., carbonated water, fruit juice-containing carbonated beverages, fruit juice-free carbonated beverages, dairy carbonated beverages, energy beverages), alcohol-free beverages (e.g., alcohol-free beer, alcohol-free chu-hi), and alcoholic beverages (e.g., beer, low-malt beer, other beer-taste beverages, wine, chu-hi, sours, liqueurs, cocktails, shochu, whiskey, sake).

Preferred among these are beverages to which a lemon aroma is to be imparted, such as black tea (lemon tea), chu-hi (lemon chu-hi), alcohol-free chu-hi (alcohol-free lemon chu-hi), sour (lemon sour), and beer (Radler).

In this list, the names of beverages to which a lemon aroma is to be imparted are first mentioned, followed by the respective names of beverages, in parentheses, obtained by imparting a lemon aroma.

In the case where limonene contained in the aroma component-containing composition of the present invention is contained in essential oil, the lemon aroma imparted is an aroma derived from a lemon essential oil which is prevented from degradation, and is not an aroma imparted by lemon juice.

The aroma component-containing composition of the present invention can impart a fresh aroma of lemon peel, i.e., a peel aroma.

The aroma component-containing composition of the present invention may be added to a lemon juice-containing beverage (e.g., lemon chu-hi) immediately before consumption, whereby an aroma may be imparted thereto.

The Description describes a method for imparting an aroma, the method including adding the aroma component-containing composition of the present invention to a beverage and dissolving the aroma component-containing composition therein, whereby an aroma derived from limonene is imparted to the beverage.

Since the aroma component-containing composition of the present invention contains a water-soluble carrier, the aroma component-containing composition can be added to and dissolved in a beverage. In the case where the carrier contains sugar such as a sugar cube, the aroma component-containing composition can be easily dissolved in a beverage. Further, a sugar cube can impart its sweetness to a beverage.

The sweetness of a beverage can be adjusted to favored sweetness by adjusting the amount of sugar in the raw materials of the aroma component-containing composition or the amount of the aroma component-containing composition added to the beverage.

The following describes the aroma-imparting agent of the present invention containing the aroma component-containing composition of the present invention.

Similar to the features described with respect to the aroma component-containing composition of the present invention, the aroma-imparting agent of the present invention can be used for imparting an aroma to a different article such as a beverage.

The aroma derived from the aroma-imparting agent of the present invention is preferably imparted immediately before (roughly 15 minutes or shorter before) consumption of a beverage. Although the aroma-imparting agent of the present invention has excellent preservability, many beverages have acidic liquid characters and promote decomposition of limonene when the aroma-imparting agent is put into the beverages. Thus, preferably, the aroma-imparting agent is added to a beverage immediately before consumption of the beverage to impart the aroma.

The amount of the aroma-imparting agent added to a beverage may be, but is not limited to, 0.03 to 15 g per 100 mL of a beverage.

The amount of limonene in the aroma-imparting agent added to a beverage may be, but is not limited to, 0.1 to 40 mg per 100 mL of a beverage.

The method for producing a beverage of the present invention is a method for producing a beverage including mixing the aroma component-containing composition of the present invention with a liquid to provide a beverage in which the aroma component-containing composition is dissolved in the liquid.

Mixing the aroma component-containing composition of the present invention with a liquid can produce a beverage having an aroma derived from the aroma component-containing composition.

The liquid may be any liquid that can be used for beverages, and may be water or any beverage mentioned as an example of beverages to which an aroma is to be added using the aroma component-containing composition of the present invention.

The amount of the aroma component-containing composition added to a liquid may be, but is not limited to, 0.03 to 15 g per 100 mL of a liquid.

The amount of limonene in the aroma component-containing composition added to a liquid may be, but is not limited to, 0.1 to 40 mg per 100 mL of a liquid.

The Description describes a beverage product including a packaged beverage composed of a beverage container and a beverage packed therein and the aroma-imparting agent of the present invention attached to the beverage container.

The aroma-imparting agent of the present invention is preferably contained in a bag and attached to the beverage container.

The aroma-imparting agent can be attached to the beverage container by hanging the bag containing the aroma-imparting agent around the neck of the beverage container.

Alternatively, the aroma-imparting agent can be attached to the beverage container by sticking the bag containing the aroma-imparting agent to the upper face of a cap of the beverage container.

The bag containing the aroma-imparting agent may also enclose an oxygen absorber or a desiccant in such a manner that it is distinguishable from the aroma-imparting agent.

Non-limiting examples of the beverage container include a plastic bottle, a glass bottle, and a can. The beverage packed in the beverage container may be, but is not limited to, any of the aforementioned beverages. The beverage container may have any size.

Using the aroma-imparting agent of the present invention can add an aroma to a beverage such as a packaged beverage. In other words, the Description describes a method for adding an aroma including adding the aroma-imparting agent of the present invention to a beverage such as a packaged beverage.

The following describes the food and confectionery product of the present invention containing the aroma component-containing composition of the present invention.

Since the food and confectionery product of the present invention contain the aroma component-containing composition of the present invention, directly consuming the food and confectionery product of the present invention can give a strong sensation of a citrus aroma derived from limonene.

The Description describes an article for parenteral use containing the aroma component-containing composition of the present invention as at least one of raw materials.

Examples of the article for parenteral use include a topical agent.

Examples of the topical agent include bath additives, facial cleansers, makeup removers, shampoos, body massage preparations, soap, body cleansers, hair cleansers, cosmetics, toiletries, quasi-pharmaceutical products, and pharmaceutical products.

Using the aroma component-containing composition of the present invention as a raw material of these articles can provide articles having an aroma derived from the aroma component-containing composition.

The article may be one containing the aroma component-containing composition of the present invention as a single raw material. For example, the aroma component-containing composition of the present invention can be used as a bath additive.

Dissolving the aroma component-containing composition of the present invention in warm water and thereby using it as a bath additive can give a feeling of a citrus aroma derived from limonene.

### EXAMPLES

The following describes examples of the aroma-imparting agent of the present invention that serves as the aroma component-containing composition of the present invention. The present invention is not limited to the following examples.

### (Examination of effect of preventing aroma degradation in the form of sugar cube)

### (Example 1)

Sugar cubes (Chitose Sugar, beet sugar Mini-ONE sugar cubes), 1 g per piece, were each impregnated with 25 µL of lemon essential oil (limonene content: 65 wt%, specific gravity: 0.85 g/cm³), whereby aroma-imparting agents were produced. The aroma-imparting agents were put into a brown glass container (with a PTFE lid packing) and the container was sealed up.

The limonene content per 1 g of the aroma-imparting agent was 13.5 mg/g.

### (Comparative Example 1)

A brown glass container and lemon essential oil, which were identical with those used in Example 1, were prepared and 1 mL of the lemon essential oil was put into the brown glass container. The container was then sealed up.

The above operations in Example 1 and Comparative Example 1 were performed at room temperature in a nitrogen chamber with an oxygen concentration of 0.0%.

The brown glass containers, which received the contents and were sealed up in Example 1 and Comparative Example 1, were placed in an incubator set at 55°C and stored for 12 days.

The container before storage was referred to as "pre-storage article" and the container after storage was referred to as "post-storage article".

### (Sensory evaluation)

First, 20-mL portions of a 5% aqueous ethanol solution were put into sensory evaluation glasses. A sugar cube (an aroma-imparting agent) was taken out of each of the pre-storage article and the post-storage article of Example 1 and the sugar cubes were put into the respective glasses.

Similarly, 20-mL portions of a 5% aqueous ethanol solution were put into other sensory evaluation glasses. A 25-µL portion of the lemon essential oil was taken out of each of the pre-storage article and the post-storage article of Comparative Example 1 and the portions of the lemon essential oil were put into the respective glasses.

The sensory evaluation glasses of Example 1 and Comparative Example 1 were each covered with a watch glass and lightly shaken so that the contents were mixed with each other. The aromas of the head spaces were then evaluated.

The sensory evaluation was performed for two aroma evaluation items, i.e., "lemon-like aroma" and "degradation-derived odor" based on the following criteria by four trained persons.
5: The aroma/odor is perceived as strong.
4: The aroma/odor is perceived as slightly strong.
3: The aroma/odor is perceived.
2: The aroma/odor is perceived slightly.
1: The aroma/odor is not perceived at all.

For the "lemon-like aroma", a higher score indicates higher evaluation. For the "degradation-derived odor", a lower score indicates higher evaluation.

The evaluation results are collectively shown in Table 1.

**[Table 1]**

| | Example 1 (sugar cube) | | Comparative Example 1 (essential oil) | |
|---|---|---|---|---|
| | Pre-storage article | Post-storage article | Pre-storage article | Post-storage article |
| Lemon-like aroma | 4.75 | 3.5 | 5.0 | 2.5 |
| Degradation-derived odor | 1.0 | 3.0 | 1.0 | 4.5 |

### (Examination of effect of preventing aroma degradation in the form of sugar cube (containing sodium citrate))

### (Example 2)

Commercially available granulated sugar, 36 g, and food additive grade trisodium citrate dihydrate, 0.9 g, were mixed with each other. Thereto was added 2 mL of purified water and the contents were further mixed with each other.

The mixture was pressed into a 1-cm-cube silicone mold and left to dryness in a vacuum chamber for 24 hours, whereby trisodium citrate-containing sugar cubes, 1 g per piece, were obtained.

These trisodium citrate-containing sugar cubes were each impregnated with 25 µL of lemon essential oil (limonene content: 65 wt%, specific gravity: 0.85 g/cm³), whereby aroma-imparting agents were produced. The aroma-imparting agents were put into a brown glass container (with a PTFE lid packing) and the container was sealed up.

The limonene content per 1 g of the aroma-imparting agent was 13.5 mg/g.

The operations after impregnating the trisodium citrate-containing sugar cubes with the lemon essential oil in Example 2 were performed at room temperature in a nitrogen chamber with an oxygen concentration of 0.0%.

The brown glass containers, which received the contents and were sealed up in Example 2, were placed in an incubator set at 55°C and stored for 12 days.

The container before storage was referred to as "pre-storage article" and the container after storage was referred to as "post-storage article".

Similar to Example 1, the sensory evaluation was performed.

The evaluation results in Example 2 were shown in Table 2 together with the results in Comparative Example 1 for comparison.

**[Table 2]**

| | Example 2 (sugar cube) | | Comparative Example 1 (essential oil) | |
|---|---|---|---|---|
| | Pre-storage article | Post-storage article | Pre-storage article | Post-storage article |
| Lemon-like aroma | 4.5 | 4.0 | 5.0 | 2.5 |
| Degradation-derived odor | 1.0 | 2.25 | 1.0 | 4.5 |

### (Examination of effect of dispersing aroma in beverage in the form of sugar cube)

### (Example 3)

Sugar cubes (Chitose Sugar, beet sugar Mini-ONE sugar cubes), 1 g per piece, were each impregnated with 30 µL of lemon essential oil (limonene content: 65 wt%, specific gravity: 0.85 g/cm³), whereby aroma-imparting agents were produced. The aroma-imparting agents were put into a brown glass container (with a PTFE lid packing) and the container was sealed up.

The limonene content per 1 g of the aroma-imparting agent was 16.2 mg/g.

### (Comparative Example 2)

A brown glass container and lemon essential oil, which were identical with those used in Example 3, were prepared and 1 mL of the lemon essential oil was put into the brown glass container. The container was then sealed up.

The above operations in Example 3 and Comparative Example 2 were performed at room temperature in a nitrogen chamber with an oxygen concentration of 0.0%.

### (Sensory evaluation)

Commercially available plastic-bottle carbonated water (500 mL) was opened and a sugar cube (an aroma-imparting agent) of Example 3 was fed thereinto. The bottle was again sealed and, after 15 seconds, re-opened. The aroma evaluation was then performed.

Similarly, commercially available plastic-bottle carbonated water (500 mL) was opened and 30 µL of the lemon essential oil of the comparative example 2 was fed thereinto. The bottle was again sealed and, after 15 seconds, re-opened. The aroma evaluation was then performed.

The sensory evaluation was performed for three aroma evaluation items, i.e., "spread of lemon aroma upon re-opening", "lemon aroma perceived upon consumption", and "lemon aroma perceived as retronasal aroma after consumption" based on the following criteria by four trained persons.
5: Perceived as strong
4: Perceived as slightly strong
3: Perceived
2: Perceived slightly
1: Not perceived at all

For the "spread of lemon aroma upon re-opening", the "lemon aroma perceived upon consumption", and the "lemon aroma perceived as retronasal aroma after consumption", a higher score indicates higher evaluation.

The evaluation results are collectively shown in Table 3.

**[Table 3]**

| | Example 3 (sugar cube) | Comparative Example 2 (essential oil) |
|---|---|---|
| Spread of lemon aroma upon re-opening | 4.5 | 5.0 |
| Lemon aroma perceived upon consumption | 4.5 | 5.0 |
| Lemon aroma perceived as retronasal aroma after consumption | 5.0 | 3.5 |

As shown in Table 1, the comparison between Example 1, using a sugar cube serving as a carrier of a limonene-containing oil, and Comparative Example 1, using a lemon essential oil, demonstrates that the post-storage article, which underwent hightemperature and long-term storage, in Example 1 exhibited a reduced degree of aroma degradation and reduced generation of degradation-derived odor due to degradation.

In Example 2 shown in Table 2, the carrier contained sodium citrate. In this Example 2, the post-storage article exhibited a more reduced degree of aroma degradation as well as more reduced generation of degradation-derived odor due to degradation than in Example 1.

Table 3 shows the aroma-dispersing effect in beverages.

Use of the aroma-imparting agents in Example 3, i.e., the sugar cubes each serving as a carrier of a limonene-containing oil, successfully allowed the persons to perceive a strong lemon aroma upon re-opening and a strong lemon aroma upon consumption comparable to those obtained in the case of using a lemon essential oil. Further, the lemon aroma perceived as retronasal aroma after consumption (in-mouth aroma) was stronger than that perceived in the case of using a lemon essential oil.

As in Example 3, a sugar cube carrier exhibits excellent dispersibility in a beverage owing to its water solubility. In contrast, as in Comparative Example 2, an essential oil fed into a beverage so as to impart an aroma exhibits poorer dispersibility in a water-based beverage because the essential oil itself is based on oil.

Further, the aroma-imparting agents used in Example 3 have excellent preservability and can therefore be favorably applied to the use of imparting an aroma by feeding an agent into a beverage immediately before consumption.

## Claims

1. An aroma component-containing composition comprising:
an edible and water-soluble carrier; and
limonene carried on the carrier,
the aroma component-containing composition having a limonene content of 1.0 mg/g or more per 1 g of the aroma component-containing composition.

2. The aroma component-containing composition according to claim 1, wherein the carrier contains sugar as one of raw materials or as a single raw material.

3. The aroma component-containing composition according to claim 1 or 2, wherein the carrier is a sugar cube.

4. The aroma component-containing composition according to claim 1 or 2, wherein the carrier further carries an oil and the limonene is contained in the oil.

5. The aroma component-containing composition according to claim 4, wherein the oil is an oil of a citrus.

6. The aroma component-containing composition according to claim 5, wherein the citrus is lemon.

7. The aroma component-containing composition according to claim 1 or 2, wherein the carrier further carries at least one selected from the group consisting of citral, linalool, and β-caryophyllene.

8. The aroma component-containing composition according to claim 1 or 2, wherein the carrier contains at least one selected from the group consisting of sodium citrate and sodium ascorbate.

9. The aroma component-containing composition according to claim 1 or 2, wherein an aqueous solution of the aroma component-containing composition dissolved in water is basic.

10. The aroma component-containing composition according to claim 1 or 2, wherein the aroma component-containing composition is free of an emulsifier.

11. The aroma component-containing composition according to claim 1 or 2, which is used for imparting an aroma to a beverage.

12. An aroma-imparting agent comprising the aroma component-containing composition according to claim 1 or 2.

13. A food comprising the aroma component-containing composition according to claim 1 or 2.

14. A confectionery product comprising the aroma component-containing composition according to claim 1 or 2.

15. A method for producing a beverage, the method comprising:
mixing the aroma component-containing composition according to claim 1 or 2 with a liquid to provide a beverage in which the aroma component-containing composition is dissolved in the liquid.
